# EUROPÄISCHE PATENTSCHRIFT

(11) **EP 2 699 782 B1**
(45) Veröffentlichungstag und Bekanntmachung des Hinweises auf die Patenterteilung: **27.02.2019**
(21) Anmeldenummer: 12713112.6
(22) Anmeldetag: 30.03.2012
(51) Int. Cl.: F02D 41/04, F02N 11/08

(54) **VORRICHTUNG UND VERFAHREN ZUM STARTEN EINES IN EINEM FAHRZEUG ANGEORDNETEN VERBRENNUNGSMOTORS**
DEVICE AND METHOD FOR STARTING AN INTERNAL COMBUSTION ENGINE ARRANGED IN A VEHICLE
DISPOSITIF ET PROCÉDÉ POUR DÉMARRER UN MOTEUR THERMIQUE MONTÉ DANS UN VÉHICULE

(30) Priorität: 19.04.2011 DE 102011007692
(43) Veröffentlichungstag der Anmeldung: 26.02.2014
(73) Patentinhaber: Bayerische Motoren Werke Aktiengesellschaft, 80809 München (DE)
(72) Erfinder: PRÖBSTLE, Hartmut, 86159 Augsburg (DE); MAHMOUD, Sherif, 80807 München (DE)
(86) Internationale Anmeldenummer: PCT/EP2012/055764
(87) Internationale Veröffentlichungsnummer: WO 2012/143223

(56) Entgegenhaltungen:
- EP-A2- 1 591 657
- DE-A1-102008 041 535
- GB-A- 2 427 656
- US-A1- 2010 305 820

## Beschreibung

Die vorliegende Erfindung betrifft eine Vorrichtung und ein Verfahren zum Starten eines in einem Fahrzeug angeordneten Verbrennungsmotors gemäß dem Oberbegriff des Patentanspruchs 1 bzw. 7.

Eine derartige Vorrichtung bzw. ein derartiges Verfahren ist aus der DE 10 2008 041 535 A1 bekannt. Zum technischen Hintergrund der Erfindung zählen die US 2010/305820 A1, die GB 2 427 656 A, sowie die EP 1 591 657 A2.

Heutzutage kommen Fahrzeuge zum Einsatz, die ein gegenüber einem konventionellen Fahrzeug modifiziertes Startverhalten erforderlich machen. Dies ist beispielsweise bei einem Fahrzeug der Fall, das mit einer sogenannten Start-Stopp-Automatik ausgestattet ist, oder auch bei einem Hybridfahrzeug. Mit einer Start-Stopp-Automatik wird der Verbrennungsmotor bei einem Stillstand des Fahrzeugs oder bei Unterschreiten eines Fahrzeuggeschwindigkeitsschwellenwertes abgeschaltet. Bei einem Hybridfahrzeug, insbesondere bei einem als Parallelhybrid aufgebauten Fahrzeug, ist für den Vortrieb sowohl ein Verbrennungsmotor als auch eine elektrische Maschine vorgesehen. Demzufolge kann ein Hybridfahrzeug trotz ausgeschaltetem bzw. abgelegtem Verbrennungsmotor fortbewegt werden, da hierfür die elektrische Maschine zur Verfügung steht. Das modifizierte Startverhalten hängt mit neuen Betriebsstrategien zusammen, die mit diesen Fahrzeugen möglich sind bzw. erforderlich werden.

Bei einem konventionellen Fahrzeug wird ein Erststart bzw. Initialstart des Verbrennungsmotors durchgeführt, der erstmals nach Betreten des Fahrzeugs bei Fahrtantritt vom Fahrer ausgelöst wird. Bei einem Erststart ist es nicht erforderlich, dass der Verbrennungsmotor innerhalb kürzester Zeit ein definiertes großes Drehmoment bereitstellt, insbesondere solch eines, das mit einem vorliegenden Fahrzeugbewegungszustand korreliert.

Bei einem Fahrzeug mit Start-Stopp-Automatik sind neben dem Erststart auch ein Wiederstart und, sofern das Fahrzeug als Hybridfahrzeug ausgeführt ist, ggf. auch ein Zustart des Verbrennungsmotors durchzuführen. Sowohl bei einem Wiederstart als auch bei einem Zustart existiert zunächst keine wirktechnische Verbindung des Verbrennungsmotors mit den angetriebenen Rädern des Fahrzeugs, sie steht jedoch unmittelbar bevor. Der Wiederstart und der Zustart werden von einer im Fahrzeug verbauten Steuereinheit veranlasst.

Auf einen durchzuführenden Wiederstart wird erkannt, wenn in einem definierten ersten Fahrzeugbetriebszustand ein Anfahrsignal vorliegt, wobei es sich bei diesem ersten Fahrzeugbetriebszustand um einen Fahrzeugruhezustand handeln kann, bei dem das Fahrzeug steht (Fahrzeuggeschwindigkeit Null), oder um einen ersten Fahrzeugbewegungszustand handeln kann, bei dem das Fahrzeug eine Fahrzeuggeschwindigkeit aufweist, die kleiner als ein erster Schwellenwert ist oder die größer als ein zweiter Schwellenwert und kleiner als ein dritter Schwellenwert ist. Bei diesem Fahrzeugbetriebszustand kann der Verbrennungsmotor stehen oder eine Motordrehzahl aufweisen, die zwischen einer Ablegedrehzahl und dem Wert Null liegt. Auf einen durchzuführenden Zustart wird erkannt, wenn in einem definierten zweiten Fahrzeugbetriebszustand eine Motormomentanforderung vorliegt, wobei es sich bei diesem zweiten Fahrzeugbetriebszustand um einen zweiten Fahrzeugbewegungszustand handelt, bei dem das Fahrzeug eine Fahrzeuggeschwindigkeit aufweist, die einen beliebigen Wert aus einem großen Wertebereich annehmen kann, wobei dieser Wertebereich von einer Fahrzeuggeschwindigkeit nahe dem Wert Null bis hin zu einer sehr großen Fahrzeuggeschwindigkeit reicht, die durch den Elektrofahrmodus des Hybridfahrzeugs definiert ist. Auch bei diesem Fahrzeugbetriebszustand kann der Verbrennungsmotor stehen oder eine Motordrehzahl aufweisen, die zwischen einer Ablegedrehzahl und dem Wert Null liegt. Sowohl bei dem Fahrzeugruhezustand als auch bei den Fahrzeugbewegungszuständen wird darauf abgestellt, dass der Verbrennungsmotor entweder still steht (Motordrehzahl Null), oder eine abklingende bzw. abnehmende Motordrehbewegung ausführt, die Motordrehzahl somit zwischen einer Ablegedrehzahl und dem Wert Null liegt.

Das Anfahrsignal repräsentiert ein unmittelbar bevorstehendes Anfahren des Fahrzeugs, welches aus dem Fahrzeugruhezustand oder dem ersten Fahrzeugbewegungszustand heraus begonnen werden soll. Bevorzugt soll es sich dabei um ein durch den Fahrer eingeleitetes Anfahren handeln. Als Anfahrsignal kommt beispielsweise ein Signal in Frage, welches die Betätigung des Kupplungspedals durch den Fahrer repräsentiert. Alternativ kann es sich aber auch um ein automatisiertes, also fahrerunabhängig eingeleitetes Anfahren handeln. Die Motormomentanforderung repräsentiert ein Drehmoment, welches von dem Verbrennungsmotor in dem vorliegenden zweiten Fahrzeugbewegungszustand fahrerabhängig oder fahrerunabhängig einzustellen ist. Ein fahrerabhängig einzustellendes Drehmoment ergibt sich beispielsweise aufgrund einer Betätigung des Fahrpedals durch den Fahrer. Folglich kann es sich in diesem Fall bei der Motormomentanforderung um eine die Fahrpedalbetätigung repräsentierende Größe handeln. Eine fahrerunabhängige Motormomentanforderung kann beispielsweise von einem Längsregelungssystem erzeugt werden, wobei es sich bei dem Längsregelungssystem vorzugsweise um einen Abstandsregeltempomaten handeln kann. Bei der Ablegedrehzahl handelt es sich um diejenige Motordrehzahl des Verbrennungsmotors, die beim Ablegen des Verbrennungsmotors vor liegt, d.h. bei oder unmittelbar nach Unterbrechen der Wirkverbindung zu den angetriebenen Rädern, beispielsweise bedingt durch Betätigen der Kupplung. Die Ablegedrehzahl kann der Leerlaufdrehzahl entsprechen, sie kann betriebsbedingt aber auch zeitweise oberhalb der Leerlaufdrehzahl oder bereits unterhalb der Leerlaufdrehzahl liegen.

Sowohl der Wiederstart als auch der Zustart des Verbrennungsmotors unterscheiden sich von dem Initialstart. Beim Wiederstart, beispielsweise an einer Ampel, ist innerhalb kürzester Zeit ein großes Drehmoment durch den Verbrennungsmotor bereitzustellen, der Verbrennungsmotor wird schneller gestartet als bei einem Initialstart. Beim Zustart des Verbrennungsmotors muss der Verbrennungsmotor innerhalb kürzester Zeit ein mit dem Fahrzeugbewegungszustand korrelierendes Drehmoment bereitstellen, es ist ein sehr schnelles "Hochreißen" des Verbrennungsmotors auf eine gewünschte Antriebsdrehzahl erforderlich (Reflexstart). Im Vergleich zu einem Initialstart handelt es sich somit sowohl bei einem Wiederstart als auch bei einem Zustart um einen sogenannten Reflexstart.

Bei einem Hybridfahrzeug ist neben dem Initialstart auch ein Zustart des Verbrennungsmotors durchzuführen. Sofern das Hybridfahrzeug mit einer Start-Stopp-Automatik ausgestattet ist, ist auch ein Wiederstart des Verbrennungsmotors durchzuführen. Hierbei gelten die vorstehenden, zu einem Fahrzeug mit Start-Stopp-Automatik gemachten Ausführungen in entsprechender Weise.

Wie bereits ausgeführt, kann es erforderlich sein, einen Wiederstart oder Zustart des Verbrennungsmotors in einem Fahrzeugbetriebszustand durchzuführen, bei dem eine abklingende bzw. abnehmende Motordrehbewegung vorliegt, der Verbrennungsmotor sich somit in einem Verbrennungsmotorbetriebszustand mit auslaufender Motordrehzahl befindet. Solch eine Situation kann beispielsweise dann auftreten, wenn zu einem ersten Zeitpunkt eine Verbrennungsmotorstoppbedingung bzw. Ablegebedingung erfüllt ist und zu einem späteren zweiten Zeitpunkt eine Verbrennungsmotorstartbedingung erfüllt ist, wobei der zweite Zeitpunkt innerhalb derjenigen Zeitspanne liegt, innerhalb der die Motordrehzahl des Verbrennungsmotors abnimmt bzw. ausläuft. Im ungünstigsten Fall folgt der zweite Zeitpunkt unmittelbar auf den ersten Zeitpunkt, d.h. die im zweiten Zeitpunkt vorliegende Motordrehzahl des Verbrennungsmotors hat gegenüber dem ersten Zeitpunkt noch nicht nennenswert abgenommen. In solch einer "Change-of-mind-Situation" ist entgegen der ursprünglichen Absicht, den Verbrennungsmotor zu stoppen bzw. abzulegen nunmehr ein Weiterbetreiben bzw. Wiederstarten bzw. Zustarten des Verbrennungsmotors gewünscht. Eine Verbrennungsmotorstoppbedingung bzw. Ablegebedingung liegt beispielsweise vor, wenn sich das Fahrzeug in dem Fahrzeugruhezustand oder in einem der beiden Fahrzeugbewegungszustände befindet und die Wirkverbindung zwischen dem Verbrennungsmotor und den angetriebenen Rädern des Fahrzeuges unterbrochen ist. Bzgl. der Verbrennungsmotorstartbedingung wird auf die vorstehenden Ausführungen verwiesen.

Eine "Change-of-mind-Situation" kann beispielsweise dann auftreten, wenn ein Fahrzeug mit Start-Stopp-Automatik an einer roten Ampel zum Stillstand kommt und der Verbrennungsmotor aufgrund des Vorliegens der Verbrennungsmotorstoppbedingung abgelegt wird, jedoch unmittelbar nach Einleiten des Ablegevorgangs aufgrund eines Signalwechsels der Ampel eine Weiterfahrt möglich ist, weswegen ein Anfahrsignal erzeugt wird und der Verbrennungsmotor wieder gestartet werden muss. Zum Zeitpunkt des Wiederstarts weist der Verbrennungsmotor einen abnehmenden Drehzahlverlauf auf. Auch bei einem Hybridfahrzeug kann es zu solch einer Situation kommen, beispielweise dann, wenn in einer Fahrsituation der Verbrennungsmotor abgelegt und der Vortrieb des Fahrzeugs ausschließlich durch die elektrische Maschine erfolgt, jedoch unmittelbar nach Einleiten des Ablegevorgangs aufgrund einer nicht vorhersehbaren Änderung im Fahrbetrieb bzw. in der Fahrsituation eine Motormomentanforderung für den Verbrennungsmotor vorliegt und der Verbrennungsmotor zugestartet werden muss. Zum Zeitpunkt des Zustarts weist der Verbrennungsmotor einen abnehmenden Drehzahlverlauf auf. Bei solchen fahrmanöverrelevanten Wiederstart bzw. Zustartanforderungen muss der Startvorgang des Verbrennungsmotors möglichst schnell aus unterschiedlichen Ablegedrehzahlen des Verbrennungsmotors heraus erfolgen. Es ist ein sogenannter Reflexstart durchzuführen.

Bei einem Reflexstart, bei dem also unmittelbar nach Einleiten des Ablegevorgangs ein Wiederstart- oder Zustartvorgang des Verbrennungsmotors erfolgen soll, tritt nun folgendes Problem auf: dadurch dass der Wiederstart- oder Zustartvorgang unmittelbar auf den Ablegevorgang folgt, hat die Drehzahl des Verbrennungsmotors gegenüber der Ablegedrehzahl noch nicht nennemswert abgenommen. Nun ist es aber so, dass konventionelle motorangebundene 12-V-Starter erst bei einer genügend niedrigen Motordrehzahl des Verbrennungsmotors diesen übernehmen und somit wieder starten können, wobei die genügend niedrige Motordrehzahl deutlich unterhalb der Ablegedrehzahl und vorzugsweise nahe der Drehzahl Null liegt. Dies würde bedeuten, dass beim Einsatz solch eines konventionellen Starters eine entsprechend große Zeitdauer vergehen und somit gewartet werden müsste, bis ein Wiederstart- oder Zustartvorgang eingeleitet werden könnte. Diese zeitliche Lücke führt zu einer Beeinträchtigung des Fahrzeugfahrverhaltens und wird vom Fahrer als nachteilig empfunden, weswegen sie nicht akzeptabel ist.

Gleichwohl sind bereits Startsysteme am Markt, die Reflexstart fähig sind und mit denen somit unmittelbar nach Einleiten eines Ablegevorgangs ein Wiederstart- oder Zustartvorgang durchgeführt werden kann. Bei solchen Startsystemen kommen speziell ausgebildete elektrische Maschinen zum Antreiben des Verbrennungsmotors zum Einsatz, beispielsweise sogenannte freilaufangebundene Ritzelstarter. Solche Ritzelstarter haben jedoch den Nachteil, dass sie teuer und zudem nicht in allen Fahrzeugklassen einsetzbar sind. Es ist daher eine Aufgabe der vorliegenden Erfindung, eine Vorrichtung und ein Verfahren der eingangs genannten Art weiterzubilden, um schnellstmöglich an einen bereits eingeleiteten Ablegevorgang einen Widerstart oder Zustart eines Verbrennungsmotors realisieren zu können, und somit die durch die Auslaufzeit des Verbrennungsmotors bedingte Beeinträchtigung im Fahrzeugfahrverhalten zu reduzieren bzw. zu beseitigen. Insbesondere soll es möglich sein, mit einem konventionellen Starter einen Reflexstart realisieren zu können, d.h. unmittelbar an einen eingeleiteten Ablegevorgang einen Widerstart oder Zustart des Verbrennungsmotors durchführen zu können. Insgesamt soll eine kostengünstige, einfach zu realisierende Vorrichtung und ein entsprechendes Verfahren bereitgestellt werden, bei dem die Zustart oder Wiederstartverfügbarkeit in sogenannten "Change-of-mind-Situationen" erhöht ist.

Diese Aufgabe wird durch eine Vorrichtung der eingangs genannten Art mit den Merkmalen des Anspruchs 1 gelöst.

Die Aufgabe wird ferner durch ein Verfahren der eingangs genannten Art mit den Merkmalen des Anspruchs 7 gelöst.

Der erfindungsgemäßen Vorrichtung und dem erfindungsgemäßen Verfahren liegt folgende Idee zugrunde: Durch eine intelligente Betriebsstrategie, bei der ohnehin im Fahrzeug verbaute Verbrauchsaggregate angesteuert und somit zugeschaltet werden, wenn eine Verbraucheraggregatansteuerbedingung vorliegt, wird eine auf den Verbrennungsmotor wirkende Last erzeugt oder eine ggf. bereits vorhandene Last erhöht. Diese Änderung in der auf den Verbrennungsmotor wirkenden Last (entweder ausgehend von dem Lastwert Null oder einem von Null verschiedenen Lastwert) führt bei einem auslaufenden Verbrennungsmotor zu einer Änderung im Bremsmoment und somit in der Motordrehzahl, genauer gesagt zu einer verstärkten Abnahme der Motordrehzahl. Dadurch wird die Auslaufzeit des Verbrennungsmotors, also diejenige Zeit, die vergeht, bis der Verbrennungsmotor ausgehend von einer Ablegedrehzahl eine Motordrehzahl erreicht, bei der die elektrische Maschine den Verbrennungsmotor zur Realisierung eines Wiederstarts oder Zustarts übernehmen kann, in starkem Maße reduziert. Somit ist es möglich, unmittelbar an einen eingeleiteten Ablegevorgang einen Widerstart oder Zustart des Verbrennungsmotors durchführen zu können, vor allem auch dann, wenn das Fahrzeug mit einem konventionellen Starter ausgestattet ist. Somit kann mit einem konventionellen Starter ein Reflexstart durchgeführt werden. Die durch eine unverhältnismäßig große Auslaufzeit des Verbrennungsmotors bedingte Beeinträchtigung im Fahrzeugfahrverhalten kann somit reduziert bzw. beseitigt werden, wodurch die Verfügbarkeit eines Zustarts bzw. Wiederstarts bei sogenannten "Change-of-mind-Situationen" erhöht wird. Zudem lässt sich die Erfindung in einfacher Art und Weise in gegenwärtige Start- bzw. Bordnetzarchitekturen integrieren, da hierfür lediglich eine Softwareanpassung erforderlich ist.

Die obengenannte Aufgabe ist daher vollständig gelöst.

In einer weiteren Ausgestaltung der Erfindung liegt die Verbraucheraggregatansteuerbedingung vor, wenn eine Wirkverbindung zwischen dem Verbrennungsmotor und angetriebenen Rädern unterbrochen ist und der Verbrennungsmotor zumindest zeitweise einen abnehmenden Verbrennungsmotordrehzahlverlauf aufweist. Mit Hilfe dieser Bedingung lässt sich eindeutig und zuverlässig ermitteln, ob ein Fahrzeugbetriebszustand vorliegt, bei dem die in dem Fahrzeug verbauten Verbraucheraggregate anzusteuern und somit zuzuschalten sind, um ein Reduzieren der Auslaufzeit des Verbrennungsmotors zu erzielen. Die Eindeutigkeit und Zuverlässigkeit wird dadurch erreicht, dass zu der Verbrennungsmotorstoppbedingung - die Wirkverbindung zwischen dem Verbrennungsmotor und den angetriebenen Rädern ist unterbrochen - zusätzlich überprüft wird, ob die Motordrehzahl des Verbrennungsmotors abnimmt. Theoretisch und somit alternativ würde es auch ausreichen, wenn als Verbraucheraggregatansteuerbedingung lediglich die Verbrennungsmotorstoppbedingung überprüft werden würde.

In einer weiteren Ausgestaltung der Erfindung liegt die Verbrennungsmotorstartbedingung vor, wenn in einem ersten Fahrzeugbetriebszustand ein Anfahrsignal vorliegt und/oder wenn in einem zweiten Fahrzeugbetriebszustand eine Motormomentanforderung vorliegt. Somit kann eindeutig festgestellt werden, ob bzw. wann ein Wiederstart (erster Fahrzeugbetriebszustand) oder ein Zustart (zweiter Fahrzeugbetriebszustand) des Verbrennungsmotors erforderlich ist. Vorzugsweise handelt es sich bei dem ersten Fahrzeugbetriebszustand um einen Fahrzeugruhezustand, bei dem das Fahrzeug steht, oder um einen ersten Fahrzeugbewegungszustand, bei dem das Fahrzeug eine Fahrzeuggeschwindigkeit aufweist, die kleiner als ein erster Schwellenwert ist oder die größer als ein zweiter Schwellenwert und kleiner als ein dritter Schwellenwert ist. Somit ist die Erfindung sowohl bei einem in einem Fahrzeugruhezustand als auch bei einem in einem Fahrzeugbewegungszustand durchzuführenden Wiederstart einsetzbar. Beispielsweise kann der erste Schwellenwert nahe Null liegen, vorzugsweise den Wert 3km/h aufweisen, wie dies bei Fahrzeugen der Fall ist, die mit einer konventionellen StartStopp-Automatik ausgestattet sind. Bei einer solchen konventionellen StartStopp-Automatik kann der erste Schwellenwert vorzugsweise auch 5km/h oder gar 7km/h betragen. Bei Fahrzeugen, die mit einer weiter entwickelten Start-Stopp-Automatik ausgestattet sind, kann der erste Schwellenwert in einem Bereich von 20km/h bis 50km/h liegen, vorzugsweise beträgt der erste Schwellenwert 20km/h oder 30km/h oder 50km/h. Der zweite Schwellenwert kann die Werte 3km/h oder 5km/h oder 7km/h aufweisen und der dritte Schwellenwert kann die Werte 20km/h oder 30km/h oder 50km/h aufweisen. Der Fahrzeugruhezustand ist so definiert, dass das Fahrzeug steht (Fahrzeuggeschwindigkeit Null). Weiter vorzugsweise handelt es sich bei dem zweiten Fahrzeugbetriebszustand um einen zweiten Fahrzeugbewegungszustand, bei dem das Fahrzeug eine Fahrzeuggeschwindigkeit aufweist, die einen beliebigen Wert aus einem großen Wertebereich annehmen kann, wobei dieser Wertebereich von einer Fahrzeuggeschwindigkeit nahe dem Wert Null bis hin zu einer sehr großen Fahrzeuggeschwindigkeit reicht, die durch den Elektrofahrmodus des Hybridfahrzeugs definiert ist. Der Zustart des Verbrennungsmotors soll somit ausgehend von ganz niedrigen, nahe Null liegenden Fahrzeuggeschwindigkeiten, bis hin zu sehr hohen Fahrzeuggeschwindigkeiten möglich sein, die beispielsweise bei 50km/h oder 70km/h oder 100km/h oder deutlich höheren Werten liegen können.

Vorteilhafterweise kann die Erfindung in unterschiedlich konfigurierten Fahrzeugen zum Einsatz kommen, so zum Beispiel in einem Fahrzeug mit StartStopp-Automatik, wobei es unerheblich ist, ob das Fahrzeug mit einem Handschaltgetriebe oder einem Automatikgetriebe ausgestattet ist. Die StartStopp-Automatik kann dabei so ausgeführt sein, dass die Verbrennungsmotorstoppbedingung vorliegt, wenn das Fahrzeug steht (Fahrzeuggeschwindigkeit Null) oder wenn das Fahrzeug eine Fahrzeuggeschwindigkeit aufweist, die kleiner als ein erster Schwellenwert ist oder wenn das Fahrzeug eine Fahrzeuggeschwindigkeit aufweist, die größer als ein zweiter Schwellenwert und kleiner als ein dritter Schwellenwert ist. Die Erfindung kann auch in einem Hybridfahrzeug zum Einsatz kommen. Vorzugsweise kann die Erfindung auch in einem Fahrzeug eingesetzt werden, welches sowohl über eine Wiederstartfunktionalität als auch über eine Zustartfunktionalität verfügt, also beispielsweise bei einem Hybridfahrzeug mit Start-Stopp-Automatik. Weiter vorteilhafterweise kann die Erfindung im Rahmen der Durchführung eines beliebigen Startvorgangs eingesetzt werden, der während des Fahrbetriebs eines Fahrzeugs durchzuführen ist und der sich von einem Erst- bzw. Initialstart unterscheidet.

In einer weiteren Ausgestaltung der Erfindung ist die Steuereinheit ferner dazu ausgebildet, die elektrische Maschine zum Antreiben des Verbrennungsmotors anzusteuern, wenn eine die Verbrennungsmotordrehzahl repräsentierende Größe kleiner oder gleich einem Schwellenwert ist. Durch diese Maßnahme ist sichergestellt, dass die elektrische Maschine erst dann angesteuert wird, wenn die Motordrehzahl des Verbrennungsmotors einen Wert erreicht hat, bei dem die elektrische Maschine den Verbrennungsmotor problemlos und ohne dabei beschädigt zu werden übernehmen und diesen somit wieder starten kann. Dies ermöglicht den Einsatz konventioneller Starter. Dabei kann vorgesehen sein, dass der Schwellenwert einem von Null verschiedenen Wert entspricht, was bedeutet, dass die elektrische Maschine einen auslaufenden Verbrennungsmotor übernimmt bzw. wiederstartet. Es kann aber auch vorgesehen sein, dass der Schwellenwert dem Wert Null entspricht, was bedeutet, dass die elektrische Maschine einen ausgelaufenen Verbrennungsmotor übernimmt bzw. wiederstartet.

In einer weiteren Ausgestaltung der Erfindung ist die Steuereinheit ferner dazu ausgebildet, das Ansteuern des Verbraucheraggregats zu beenden, wenn die Verbrennungsmotorstartbedingung vorliegt. Durch diese Maßnahme wird sichergestellt, dass, sobald der Startvorgang beginnt, mit dem der Verbrennungsmotor gestartet wird, insbesondere wiedergestartet oder zugestartet werden soll, die erzeugte oder erhöhte, auf den Verbrennungsmotor wirkende Last, nicht mehr vorhanden ist, und somit der Verbrennungsmotor schnellstmöglich gestartet und ein definiertes gewünschtes Drehmoment erzeugen kann. Alternativ oder ergänzend kann das Ansteuern des Verbraucheraggregats auch beendet werden, wenn die die Verbrennungsmotordreh zahl repräsentierende Größe kleiner oder gleich dem zugehörigen Schwellenwert ist.

In einer weiteren Ausgestaltung der Erfindung ist die Steuereinheit ferner dazu ausgebildet, die Zahl der anzusteuernden Verbraucheraggregate abhängig von dem Verbrennungsmotordrehzahlwert zu machen, der zu dem Zeitpunkt vorliegt, zu dem die Verbraucheraggregatansteuerbedingung erfüllt ist, insbesondere erstmals erfüllt ist. Alternativ oder ergänzend ist die Steuereinheit ferner dazu ausgebildet, die Art der Ansteuerung des Verbraucheraggregats abhängig von dem Verbrennungsmotordrehzahlwert zu machen, der zu dem Zeitpunkt vorliegt, zu dem die Verbraucheraggregatansteuerbedingung erfüllt ist, insbesondere erstmals erfüllt ist. Diese Maßnahme ermöglicht ein flexibles und an äußere Gegebenheiten angepasstes Ansteuern der Verbraucheraggregate. So ist es denkbar, bei einem Ablegevorgang, der ausgehend von einer hohen Ablegedrehzahl eingeleitet wird, eine größere Anzahl von Verbraucheraggregaten anzusteuern, als bei einem Ablegevorgang, der ausgehend von einer niedrigeren Ablegedrehzahl eingeleitet wird. Ergänzend oder alternativ ist es denkbar, bei einem Ablegevorgang, der ausgehend von einer hohen Ablegedrehzahl eingeleitet wird, ein Verbraucheraggregat derart anzusteuern, dass dadurch eine größere Last auf den Verbrennungsmotor wirkt, als bei einem Ablegevorgang, der ausgehend von einer niedrigeren Ablegedrehzahl eingeleitet wird. Somit ist sichergestellt, dass der Verbrennungsmotor immer schnellstmöglich wiedergestartet oder zugestartet werden kann, unabhängig davon, wie groß die Ablegedrehzahl ist, ausgehend von der der Ablegevorgang eingeleitet wird.

In einer weiteren Ausgestaltung der Erfindung ist eines der Verbraucheraggregate ein Generator, der dazu ausgebildet ist, zumindest zeitweise die Speichereinheit zu laden, wobei die Steuereinheit dazu ausgebildet ist, bei Vorliegen der Verbraucheraggregatansteuerbedingung den Generator so anzusteuern, dass dieser einen maximal möglichen Ladestrom abgibt. Diese Maßnahme hat folgenden Vorteil: das erfindungsgemäße Ansteuern der Verbraucheraggregate zum Erzeugen oder Erhöhen einer auf den Verbrennungsmotor wirkenden Last führt dazu, dass elektrische Energie verbraucht wird. Wird nun zum Zweck der Lasterhöhung oder Lasterzeugung der Generator angesteuert, so wird nicht nur Energie verbraucht, sondern zu einem gewissen Teil auch wieder Energie erzeugt, die in der Speichereinheit gespeichert werden kann. Dies trägt zu eine günstigen Energiebilanz und somit zu einem geringeren Kraftstoffverbrauch bei.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine schematische Darstellung eines teilumfänglichen Fahrzeugantriebsstrangs zur Erläuterung der Erfindung,

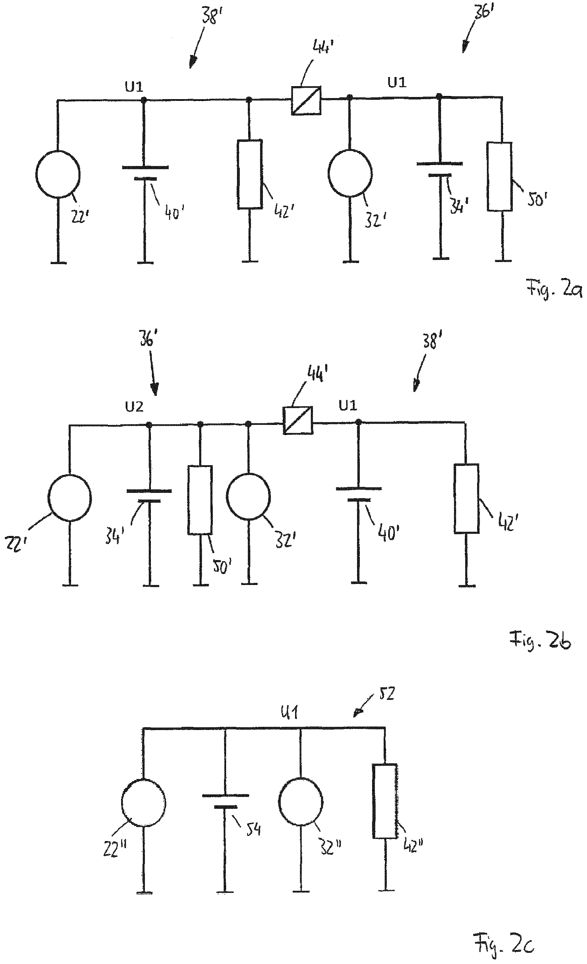

Fig. 2 in drei Teilfiguren unterschiedliche Bordnetzarchitekturen, in denen die Erfindung zur Anwendung kommen kann, und
Fig. 3 zwei Verbrennungsmotordrehzahlverläufe zur Erläuterung der Erfindung.

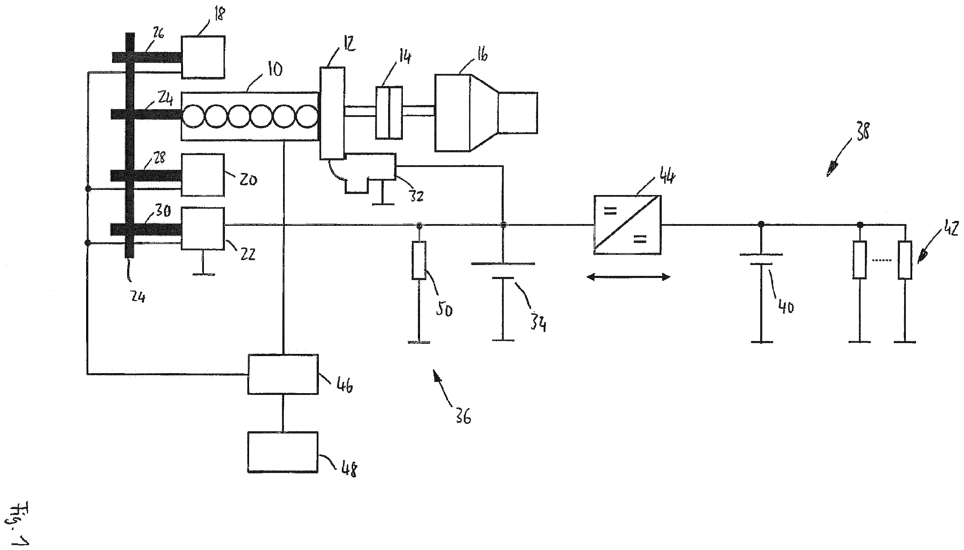

In Fig. 1 ist ein in einem Fahrzeug angeordneter Verbrennungsmotor 10 dargestellt. Dieser steht über ein Zweimassenschwungrad 12 und eine Trennkupplung 14 mit einem Getriebe 16 in Wirkverbindung, um nicht dargestellte Antriebsräder anzutreiben. Ferner weist das Fahrzeug verschiedene Verbraucheraggregate auf. Hierbei kann es sich um im Fahrzeug angeordnete Pumpen, handeln, von denen eine, nämlich die Wasserpumpe 18, exemplarisch dargestellt ist. Weitere Verbraucheraggregate sind ein in einer Klimaanlag enthaltener Kältekompressor 20 und ein elektrischer Generator 22. Die Verbraucheraggregate sind zumindest zeitweise durch den Verbrennungsmotor 10 über eine jeweilige wirktechnische Verbindung antreibbar, wobei die wirktechnische Verbindung jeweils aus einem Verbindungshauptstrang 24 und einem jeweiligen Verbindungsindividualstrang 26, 28, 30 besteht.

Insgesamt entspricht der bis hierher beschriebene Aufbau einem konventionellen Fahrzeug. Bei einem Hybridfahrzeug, insbesondere bei einem als Parallelhybrid ausgeführten Fahrzeug, ist für den Vortrieb neben dem Verbrennungsmotor 10 zusätzlich eine entsprechend ausgelegte elektrische Maschine vorgesehen.

Zum Starten des Verbrennungsmotors 10 ist eine elektrische Maschine 32 vorgesehen. Ferner ist eine Speichereinheit 34 vorgesehen, über die die elektrische Maschine 32 zumindest zeitweise mit elektrischer Energie versorgt wird. Die Speichereinheit 34 ist Teil eines ersten Bordnetzes 36, das für die Versorgung der elektrischen Maschine 32 vorgesehen ist. Bei der Speichereinheit 34 kann es sich beispielsweise um einen Lithium-Ionen-Akkumulator handeln. Das Fahrzeug weist ein zweites, konventionelles Bordnetz 38 auf, das auch als Basisbordnetz bezeichnet wird. Das zweite Bordnetz 38 weist eine weitere Speichereinheit 40 auf, die beispielsweise als konventioneller Bleiakkumulator ausgeführt ist. Aus der weiteren Speichereinheit 40 werden erste Verbraucher 42 mit elektrischer Energie versorgt. Der elektrische Generator 22 dient zum Laden der Speichereinheit 34 und der weiteren Speichereinheit 40, wobei die weitere Speichereinheit 40 über einen entsprechend ausgelegten Gleichspannungswandler 44 mit dem Generator 22 verbindbar ist.

Zum Ansteuern des Verbrennungsmotors 10 ist eine Steuereinheit 46 vorgesehen. Hierbei handelt es sich um eine Motorsteuereinheit, der ausgehend von Sensoren 48 die hierfür erforderlichen Größen bzw. Daten zugeführt werden. Ferner ist die Steuereinheit 46 mit den Verbraucheraggregaten, nämlich der Wasserpumpe 18, dem Kältekompressor 20 und dem elektrischen Generator 22 verbunden, um diese bei Vorliegen einer Verbraucheraggregatansteuerbedingung ansteuern zu können, um eine auf den Verbrennungsmotor 10 wirkende Last zu erzeugen und/oder zu erhöhen. Anschließend steuert die Steuereinheit 46 bei Vorliegen einer Verbrennungsmotorstartbedingung die elektrische Maschine 32 zum Antreiben des Verbrennungsmotors 10 an.

Bei der elektrischen Maschine 32 kann es sich um einen 12-V-Starter handeln, der als Ritzelstarter ausgeführt ist. Die Funktionsweise eines solchen Ritzelstarters wird nachfolgend beschrieben, wobei auf die Darstellung der in diesem Zusammenhang genannten Ritzelstarterkomponenten in Fig. 1 aus Gründen der Übersichtlichkeit verzichtet wird. Bei einem Ritzelstarter ist ein Ritzel einrückbar. Er umfasst zumindest ein Einrückrelais, welches bei einer Anforderung, einen Verbrennungsmotor zu starten aufgrund eines in einer Relaisspule aufgebauten Magnetfeldes einen Relaisanker anzieht, wodurch das Ritzel über einen Einrückhebel nach vorne gegen einen Zahnkranz einer mit dem Verbrennungsmotor verbundenen Antriebswelle geschoben wird. Gleichzeitig schließt der Relaisanker des Einrückrelais über eine Kontaktbrücke den Hauptstromkreis des Startermotors zwischen einer Speichereinheit und dem Startermotor, so dass sich der Startermotor in Bewegung setzen (drehen) und die mit ihm mittels Ritzel verbundene Antriebswelle und somit den Verbrennungsmotor zum Drehen bringen kann.

Bei der in Fig. 1 gewählten Darstellung sind in der Steuereinheit 46 verschiedene Funktionalitäten integriert. Wie bereits erwähnt, enthält die Steuereinheit 46 die Funktionalität einer Motorsteuerung. Zusätzlich sind in der Steuereinheit 46 neben einer Wiederstartfunktionalität und/oder einer Zustartfunktionalität noch diejenigen zusätzlichen Funktionalitätsumfänge integriert, die zur Realisierung der Erfindung erforderlich sind. Es ist aber auch denkbar, dass die vorstehenden Funktionalitäten nicht allesamt in einer einzigen Steuereinheit integriert sind, sondern auf eine Vielzahl eigenständiger Steuereinheiten aufgeteilt sind. Die Steuereinheit 46 ist dazu ausgebildet, zusätzliche Funktionalitätsumfänge abzuarbeiten, die zur Realisierung der Erfindung erforderlich sind. So wird in der Steuereinheit 46 ermittelt, ob eine Verbraucheraggregatansteuerbedingung vorliegt Dies ist dann der Fall, wenn die Wirkverbindung zwischen dem Verbrennungsmotor 10 und angetriebenen Rädern unterbrochen ist und der Verbrennungsmotor 10 zumindest zeitweise einen abnehmenden Verbrennungsmotordrehzahlverlauf aufweist. Ferner wird in der Steuereinheit 46 ermittelt, ob eine Verbrennungsmotorstartbedingung vorliegt, was dann der Fall ist, wenn in einem ersten Fahrzeugbetriebszustand ein Anfahrsignal vorliegt und/oder wenn in einem zweiten Fahrzeugbetriebszustand eine Motormomentanforderung vorliegt. Darüber hinaus ist die Steuereinheit 46 dazu ausgebildet, die elektrische Maschine 32 zum Antreiben des Verbrennungsmotors 10 anzusteuern, wenn eine die Verbrennungsmotordrehzahl repräsentierende Größe kleiner oder gleich einem Schwellenwert ist. Ferner ist sie dazu ausgebildet, das Ansteuern des Verbraucheraggregats, genauer gesagt der Wasserpumpe 18, des Kältekompressors 20 oder des elektrischen Generators 22 zu beenden, wenn die Verbrennungsmotorstartbedingung vorliegt. Des Weiteren ist die Steuereinheit 46 dazu ausgebildet, die Zahl der anzusteuernden Verbraucheraggregate und/oder die Art der Ansteuerung des jeweiligen Verbraucheraggregats abhängig von dem Verbrennungsmotordrehzahlwert zu machen, der zu dem Zeitpunkt vorliegt, zu dem die Verbraucheraggregatansteuerbedingung erfüllt ist. Für den Fall, dass der Generator 22 angesteuert wird, um eine auf den Verbrennungsmotor 10 wirkende Last zu erzeugen und/oder zu erhöhen, ist die Steuereinheit 46 dazu ausgebildet, den Generator 22 so anzusteuern, dass dieser einen maximal möglichen Ladestrom abgibt.

Die Steuereinheit 46 ermöglicht folgende erfindungsgemäße Betriebsstrategie: Die ohnehin im Fahrzeug verbauten Verbraucheraggregate 18, 20 ,22 werden angesteuert und somit zugeschaltet, wenn die Verbraucheraggregatansteuerbedingung vorliegt. Dadurch wird eine auf den Verbrennungsmotor 10 wirkende Last erzeugt oder eine ggf. bereits vorhandene Last erhöht, wo durch die Auslaufzeit des Verbrennungsmotors 10 reduziert wird. Somit ist es möglich, unmittelbar an einen eingeleiteten Ablegevorgang einen Wiederstart oder Zustart des Verbrennungsmotors 10 durchführen zu können. Es kann ein Reflexstart mit einem konventionellen Starter durchgeführt werden.

Wie bereits erwähnt, werden der Steuereinheit 46 ausgehend von den Sensoren 48 verschiedene Größen, Signale oder Daten zugeführt. Es handelt sich hierbei um solche, die zur Realisierung der Motorsteuerfunktionalität erforderlich sind und von denen hier lediglich einige exemplarisch genannt seien, wie beispielsweise eine die Verbrennungsmotordrehzahl repräsentierende Größe und/oder eine die Verbrennungsmotortemperatur repräsentierende Größe und/oder eine die Fahrpedalstellung repräsentierende Größe. Ferner sind der Steuereinheit 46 Größen, Signale oder Daten zuzuführen, die benötigt werden für die Realisierung der Wiederstartfunktionalität und/oder der Zustartfunktionalität und der zusätzlichen Funktionalitätsumfänge, die zur Realisierung der Erfindung erforderlich sind. Unter Bezugnahme auf die eingangs gemachten Ausführungen ist mit Blick auf die Wiederstartfunktionalität und/oder die Zustartfunktionalität festzustellen, ob das Fahrzeug steht oder fährt. Folglich ist eine die Fahrzeuggeschwindigkeit repräsentierende Größe zuzuführen. Ferner ist eine die Motordrehzahl repräsentierende Größe, sowie ein Anfahrsignal und eine Größe zuzuführen, die eine vorliegende Motormomentanforderung repräsentiert.

Hinsichtlich der zusätzlichen Funktionalitätsumfänge, die zur Realisierung der Erfindung erforderlich sind, sind der Steuereinheit 46 folgende Größen, Signale oder Daten zuzuführen: Um feststellen zu können, ob die Verbraucheraggregatansteuerbedingung vorliegt, ist eine Information darüber erforderlich, ob die Wirkverbindung zwischen dem Verbrennungsmotor 10 und den angetriebenen Rädern unterbrochen ist. Zu diesem Zweck ist der Speichereinheit 46 beispielsweise eine die Betätigung des Kupplungspedals repräsentierende Größe zuzuführen. Ferner wird eine Information darüber benötigt, ob ein abnehmender Verbrennungsmotordrehzahlverlauf vorliegt, weswegen eine die Motordrehzahl repräsentierende Größe zuzuführen ist. Darüber hinaus wird in der Steuereinheit 46 ermittelt, ob die Verbrennungsmotorstartbedingung vorliegt. Hinsichtlich der hierfür in der Steuereinheit 46 auszuwertenden und somit dieser zuzuführenden Größen, Signale oder Daten sei auf die Ausführungen zur Wiederstartfunktionalität und Zustartfunktionalität verwiesen.

Die in Fig. 1 gezeigte schematische Darstellung soll keine einschränkende Wirkung auf die Bordnetzarchitektur bzw. Topologie des Bordnetzes haben. Die noch zu beschreibenden Teilfiguren 2a, 2b und 2c zeigen unterschiedliche Bordnetzarchitekturen, bei denen die Erfindung zum Einsatz kommen kann. Der Vollständigkeit halber sei erwähnt, dass das erste Bordnetz 36 zweite Verbraucher 50 aufweist.

Teilfigur 2a zeigt ein zweites, konventionelles Bordnetz 38' (Basisbordnetz), das über einen Gleichspannungswandler 44' mit einem ersten Bordnetz 36', einem sogenannten separaten Zustartbordnetz verbunden ist. Durch den Gleichspannungswandler 44' sind die beiden Bord netze getrennt. Solch eine erweiterte Bordnetzarchitektur kommt beispielsweise bei einem Fahrzeug mit einer Start-Stopp-Automatik zum Einsatz, bei dem ein Zustatten oder Wiederstarten des Verbrennungsmotors durchzuführen ist. Diese Bordnetzarchitektur kann auch bei einem Hybridfahrzeug eingesetzt werden, bei dem ein Wiederstarten des Verbrennungsmotors durchzuführen ist. Das erste Bordnetz 36' weist eine Speichereinheit 34' zum Bereitstellen einer 12V- Spannung U1 und zweite Verbraucher 50' auf. Eine elektrische Maschine 32' ist mit der Speichereinheit 34' verbunden. Das zweite Bordnetz 38' weist einen Generator 22', eine weitere Speichereinheit 40' und erste Verbraucher 42' auf. Die Speichereinheit 34' und die weitere Speichereinheit 40'können über den Generator 22' geladen werden.

Die in Teilfigur 2b gezeigte Bordnetzarchitektur entspricht der in Fig. 1 dargestellten Bordnetzarchitektur. Ein zweites, konventionelles Bordnetz 38' ist über einen Gleichspannungswandler 44' mit einem ersten Bordnetz 36' gekoppelt. Bei dem ersten Bordnetz 36' handelt es sich um ein sogenanntes Zustartbordnetz. Das zweite Bordnetz 38' weist eine weitere Speichereinheit 40' und erste Verbraucher 42' auf. Eine elektrische Maschine 32' ist mit einer in dem ersten Bordnetz 36' enthaltenen Speichereinheit 34' verbunden. Das erste Bordnetz 36' weist ferner einen Generator 22' und zweite Verbraucher 50' auf. Die in Teilfigur 2c gezeigte Bordnetzarchitektur kann beispielsweise bei einem Fahrzeug eingesetzt werden, welches als Mild-Hybrid-Fahrzeug oder als Micro-Hybrid-Fahrzeug aufgebaut ist. Die Bordnetzspannung U2 des ersten Bornetzes 36' soll beispielsweise zwischen 20V und 60V liegen, während die Bordnetzspannung des zweiten Bordnetzes 38' 12V betragen soll.

Teilfigur 2c zeigt ein Basisbordnetz 52, wie es bei Fahrzeugen zum Einsatz kommt, die mit einer Start-Stopp-Automatik ausgestattet sind, bei denen ein Wiederstart durchgeführt wird, wenn ein Fahrzeugruhezustand oder ein erster Fahrzeugbewegungszustand vorliegt, bei dem die Fahrzeuggeschwindigkeit kleiner als ein erster Schwellenwert, vorzugsweise 3km/h ist. Das Basisbordnetz 52 weist einen Generator 22", eine Speichereinheit 54, eine elektrische Maschine 32" und erste Verbraucher 42" auf.

An dieser Stelle sein erwähnt, dass die Erfindung bei beliebigen Bordnetzarchitekturen bzw. Topologien von Bordnetzen eingesetzt werden kann, unter anderem bei den in den Teilfiguren 2a, 2b und 2c dargestellten. Dies soll keine einschränkende Wirkung haben. Die Erfindung kann auch bei weiteren, hier nicht beschriebenen Bordnetzarchitekturen zum Einsatz kommen.

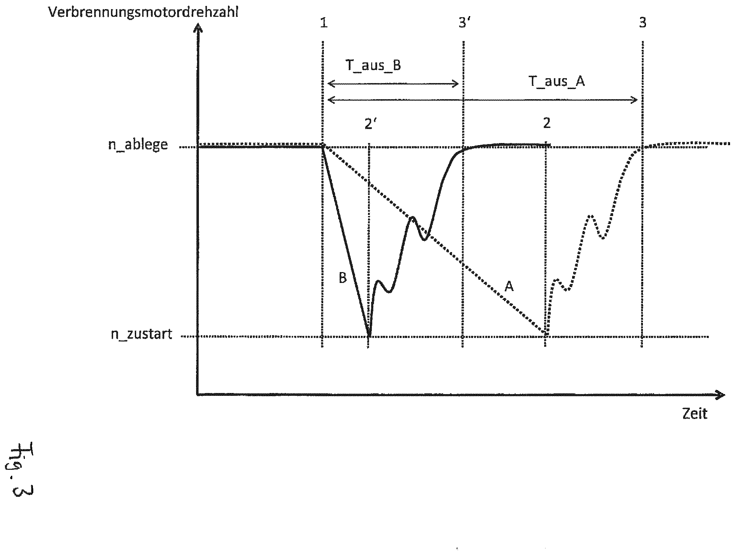

Fig. 3 zeigt zwei über der Zeit aufgetragene Verbrennungsmotordrehzahlverläufe. Der mit A bezeichnete und punktliniert dargestellte Verlauf repräsentiert einen Verbrennungsmotordrehzahlverlauf, wie er sich bei einem Startsystem einstellt, bei dem die Erfindung nicht zum Einsatz kommt. Wohingegen der mit B bezeichnete und mit durchgezogenen Linien dargestellte Verlauf einen Verbrennungsmotordrehzahlverlauf repräsentiert, wie er sich bei einem Startsystem einstellt, bei dem die Erfindung zum Einsatz kommt, also Maßnahmen zur Startzeitverkürzung ergriffen werden.

Die in Fig. 3 verwendeten Abkürzungen haben folgende Bedeutung:
- Mit n_ablege ist die Ablegedrehzahl des Verbrennungsmotors 10 bezeichnet, die dieser bei Einleiten des Ablegevorgangs, d.h. zum Zeitpunkt 1 aufweist. In der Regel ist die Ablegedrehzahl größer als 500U/min. An dieser Stelle sei Folgendes angemerkt: Es soll keine einschränkende Wirkung haben, dass der Drehzahlverlauf für vor dem Zeitpunkt 1 liegende Zeiten auf gleichem Niveau verläuft. Es ist durchaus denkbar, dass die Drehzahl in diesem Zeitabschnitt bereits fallend verläuft. In der Regel ist die Ablegedrehzahl kleiner als die Leerlaufdrehzahl des Verbrennungsmotors 10. Der Ablegevorgang kann von unterschiedlich hohen Ablegedrehzahlen aus eingeleitet werden, d.h. zum Zeitpunkt 1 muss nicht zwingend eine einheitliche Ablegedrehzahl vorliegen.
- Mit n_zustart ist die maximale Drehzahl bzw. Abfangdrehzahl des Verbrennungsmotors 10 bezeichnet, bei der die elektrische Maschine 32 den Verbrennungsmotor 10 übernehmen und starten kann. Die Abfangdrehzahl hat in der Regel einen, insbesondere deutlich von Null verschiedenen Wert betragen. In diesem Fall wird durch die elektrische Maschine ein auslaufender Verbrennungsmotor übernommen bzw. wieder gestartet. Die Abfangdrehzahl kann aber auch 0 U/min betragen. In diesem Fall wird durch die elektrische Maschine ein ausgelaufener Verbrennungsmotor übernommen bzw. wieder gestartet.
- T_aus_A bzw. T_aus_B bezeichnet diejenige Zeitdauer, die vergeht, bis der Verbrennungsmotor 10 ausgehend vom Einleiten des Ablegevorgangs (Zeitpunkt 1) seine vollständige verbrennungsmotorische Fahrverfügbarkeit wieder erlangt. Es handelt sich somit um diejenige Zeit, die vergeht, bis der Verbrennungsmotor 10 ausgehend von einem eingeleiteten Ablegevorgang erfolgreich wiedergestartet bzw. zu gestartet ist. Diese Zeitdauer ist durch die Zeitpunkte 1 und 3 bzw. 1 und 3' definiert.

Zunächst wird auf den mit A bezeichneten Verbrennungsmotordrehzahlverlauf eingegangen. Zum Zeitpunkt 1 wird der Verbrennungsmotor bei einer endlichen Ablegedrehzahl n_ablege abgelegt, der Ablegevorgang wird eingeleitet. Danach wird der Verbrennungsmotor sich selbst überlassen. Es muss eine Zeitdauer abgewartet werden, bis der Verbrennungsmotor 10 die Abfangdrehzahl n_zustart erreicht, wobei diese als Auslaufzeit bezeichnete Zeitdauer durch die beiden Zeitpunkte 1 und 2 definiert ist. Zum Zeitpunkt 2 kann die als Ritzelstarter ausgebildete elektrische Maschine 32 den Verbrennungsmotor 10 übernehmen, weshalb das Ritzel des Ritzelstarters eingerückt wird, wodurch der Startvorgang initialisiert wird. Der Startvorgang dauert die durch die beiden Zeitpunkte 2 und 3 definierte Zeitspanne an. Für nach dem Zeitpunkt 3 liegende Zeitpunkte hat der Verbrennungsmotor 10 seine volle verbrennungsmotorische Fahrverfügbarkeit wieder erlangt. Die Zeitdauer, die mit dem Einleiten des Ablegevorgangs (Zeitpunkt 1) beginnt und mit Erlangen der vollen verbrennungsmotorischen Fahrverfügbarkeit (Zeitpunkt 3) endet, ist somit die Summe aus der Auslaufzeit (Zeitpunkt 1 bis Zeitpunkt 2) und der Startzeit (Zeitpunkt 2 bis Zeitpunkt 3).

Nachfolgend wird nun auf den mit B bezeichneten Verbrennungsmotordrehzahlverlauf eingegangen, der sich einstellt, wenn ein Startsystem zum Einsatz kommt, bei dem die Erfindung implementiert ist und somit Maßnahmen zur Startzeitverkürzung, genauer gesagt Maßnahmen zur Verkürzung der Auslaufzeit ergriffen werden. Zum Zeitpunkt 1 wird der Verbrennungsmotor 10 abgelegt, der Ablegevorgang wird eingeleitet. Gleichzeitig ist eine Verbraucheraggregatansteuerbedingung erfüllt, denn die Wirkverbindung zwischen dem Verbrennungsmotor 10 und den angetriebenen Rädern des Fahrzeugs ist unterbrochen und ein abnehmender Verbrennungsmotordrehzahlverlauf liegt vor, weswegen zumindest eines der Verbraucheraggregate, nämlich die Wasserpumpe 18 oder der Kältekompressor 20 oder der elektrische Generator 22 angesteuert wird, um eine auf den Verbrennungsmotor 10 wirkende Last zu erzeugen und/oder zu erhöhen. Dadurch wird während der Auslaufphase das auf den Verbrennungsmotor 10 wirkende Bremsmoment deutlich erhöht und somit die Abfangdrehzahl nzustart sehr viel früher erreicht, nämlich zum Zeitpunkt 2'. Insgesamt verkürzt sich somit die Auslaufzelt auf eine Zeitdauer, die durch die Zeitpunkte 1 und 2' definiert ist. Zum Zeitpunkt 2' kann die elektrische Maschine 32 den Verbrennungsmotor 10 übernehmen, der Startvorgang wird initialisiert. Der Startvorgang dauert die durch die beiden Zeitpunkte 2' und 3' definierte Zeitspanne an, die üblicherweise derjenigen Startzeit des mit A bezeichneten Drehzahlverlaufs entspricht, die durch die beiden Zeitpunkte 2 und 3 definiert ist. Für nach dem Zeitpunkt 3' liegende Zeitpunkte hat der Verbrennungsmotor 10 seine volle verbrennungsmotorische Fahrverfügbarkeit wieder erlangt. Somit wird die Zeitdauer, die mit dem Einleiten des Ablegevorgangs (Zeitpunkt 1) beginnt und mit dem Erlangen der vollen verbrennungsmotorischen Fahrverfügbarkeit (Zeitpunkt 3') endet, verkürzt, da die Auslaufzeit (Zeitpunkt 1 bis Zeitpunkt 2') wesentlich kürzer ist.

Das Verkürzen der Auslaufzeit wird beispielsweise dadurch erreicht, dass vorzugsweise sämtliche verfügbaren Verbraucheraggregate, nämlich die Wasserpumpe 18, der Kältekompressor 20 und der elektrische Generator 22, insbesondere kurz bzw. unmittelbar nach dem Ablegen des Verbrennungsmotors 10, angesteuert werden, um eine auf den Verbrennungsmotor 10 wirkende Last zu erzeugen und/oder zu erhöhen. Vorzugsweise werden die Verbraucheraggregate dabei in den jeweiligen höchst möglichen Lastpunkt gefahren. So wird beispielsweise für den Generator 22 die Stromabgabe ausgehend von einem Wert von 00A, der vor dem Zeitpunkt 1 vorlag, auf einen Wert von 250A für die Zeit nach dem Zeitpunkt 1 erhöht. Entsprechend kann der Kältekompressor 20 so angesteuert werden, dass sich die von ihm aufgenommene Leistung von 1 KW auf 4KW erhöht.

### Bezuaszeichenliste

- 10: Verbrennungsmotor
- 12: Zweimassenschwungrad
- 14: Trennkupplung
- 16: Getriebe
- 18: Wasserpumpe
- 20: Kältekompressor
- 22: elektrischer Generator
- 14: Verbindungshauptstrang
- 26: Verbindungsindividualstrang
- 28: Verbindungsindividualstrang
- 30: Verbindungsindividualstrang
- 32: elektrische Maschine
- 34: Speichereinheit
- 36: erstes Bordnetz
- 38: zweites Bordnetz
- 40: weitere Speichereinheit
- 42: erste Verbraucher
- 44: Gleichspannungswandler
- 46: Steuereinheit
- 48: Sensoren
- 50: zweite Verbraucher
- 52: Basisbordnetz
- 54: Speichereinheit

## Patentansprüche

1. Vorrichtung zum Starten eines in einem Fahrzeug angeordneten Verbrennungsmotors (10), mit
einer elektrischen Maschine (32, 32' 32"), die dazu ausgebildet Ist, den Verbrennungsmotor (10) zumindest zeitweise anzutreiben,
einer Speichereinheit (34, 34', 54), die dazu ausgebildet ist, die elektrische Maschine (32, 32', 32") zumindest zeitweise mit elektrischer Energie zu versorgen,
einer Anzahl von Verbraucheraggregaten (18, 20, 22), die zumindest zeitweise durch den Verbrennungsmotor (10) über eine jeweilige wirktechnische Verbindung (24, 26, 28, 30) antreibbar sind, wobei eines der Verbraucheraggregate ein Generator (22, 22', 22") ist, der dazu ausgebildet ist, zumindest zeitweise die Speichereinheit (34, 34', 54) zu laden, und
einer Steuereinheit (46), die dazu ausgebildet ist,
bei Vorliegen einer Verbraucheraggregatansteuerbedingung zumindest ein Verbraucheraggregat (18, 20, 22) anzusteuern, um eine auf den Verbrennungsmotor (10) wirkende Last zu erzeugen und/oder zu erhöhen, um eine Auslaufzeit des Verbrennungsmotors (10) zu verkürzen, und bei Vorliegen einer Verbrennungsmotorstartbedingung die elektrische Maschine (32, 32', 32") zum Antreiben des Verbrennungsmotors (10) anzusteuern,
**dadurch gekennzeichnet, dass** die Steuereinheit (46) dazu ausgebildet ist, bei Vorliegen der Verbraucheraggregatansteuerbedingung den Generator (22, 22', 22") so anzusteuern, dass dieser einen maximal möglichen Ladestrom abgibt und die Steuereinheit dazu ausgebildet ist, die Zahl der anzusteuernden Verbraucheraggregate (18, 20, 22) abhängig von dem Verbrennungsmotordrehzahlwert zu machen, der zu dem Zeitpunkt vorliegt, zu dem die Verbraucheraggregatansteuerbedingung erfüllt ist.

2. Vorrichtung nach Anspruch 1, **dadurch gekennzeichnet, dass** die Verbraucheraggregatansteuerbedingung vorliegt, wenn eine Wirkverbindung zwischen dem Verbrennungsmotor (10) und angetriebenen Rädern unterbrochen ist und der Verbrennungsmotor (10) zumindest zeitweise einen abnehmenden Verbrennungsmotordrehzahlverlauf aufweist.

3. Vorrichtung nach einem der vorstehenden Ansprüche, **dadurch gekennzeichnet, dass** die Verbrennungsmotorstartbedingung vorliegt, wenn in einem ersten Fahrzeugbetriebszustand ein Anfahrsignal vor liegt und/oder wenn in einem zweiten Fahrzeugbetriebszustand eine Motormomentanforderung vorliegt.

4. Vorrichtung nach einem der vorstehenden Ansprüche, **dadurch gekennzeichnet, dass** die Steuereinheit (46) ferner dazu ausgebildet ist, die elektrische Maschine (32, 32', 32") zum Antreiben des Verbrennungsmotors (10) anzusteuern, wenn eine die Verbrennungsmotordrehzahl repräsentierende Größe kleiner oder gleich einem Schwellenwert (n_zustart) ist.

5. Vorrichtung nach einem der vorstehenden Ansprüche, **dadurch gekennzeichnet, dass** die Steuereinheit (46) ferner dazu ausgebildet ist, das Ansteuern des Verbraucheraggregats (18, 20, 22) zu beenden, wenn die Verbrennungsmotorstartbedingung vorliegt.

6. Vorrichtung nach einem der vorstehenden Ansprüche, **dadurch gekennzeichnet, dass** die Steuereinheit (46) ferner dazu ausgebildet ist, die Art der Ansteuerung des Verbraucheraggregats (18, 20, 22) abhängig von dem Verbrennungsmotordrehzahlwert zu machen, der zu dem Zeitpunkt vorliegt, zu dem die Verbraucheraggregatansteuerbedingung erfüllt ist.

7. Verfahren zum Starten eines in einem Fahrzeug angeordneten Verbrennungsmotors (10), wobei das Fahrzeug aufweist:
eine elektrische Maschine (32, 32', 32"), die dazu ausgebildet ist, den Verbrennungsmotor (10) zumindest zeitweise anzutreiben,
eine Speichereinheit (34, 34', 54), die dazu ausgebildet ist, die elektrische Maschine (32, 32', 32") zumindest zeitweise mit elektrischer Energie zu versorgen,
eine Anzahl von Verbraucheraggregaten (18, 20, 22), die zumindest zeitweise durch den Verbrennungsmotor (10) über eine jeweilige wirktechnische Verbindung (24, 26, 28, 30) antreibbar sind, wobei eines der Verbraucheraggregate ein Generator (22, 22' 22") ist, der dazu ausgebildet ist, zumindest zeitweise die Speichereinheit (34, 34'm 54) zu laden, und eine Steuereinheit (46), wobei in der Steuereinheit (46) folgende Schritte ablaufen:
- Ansteuern zumindest eines Verbraucheraggregats (18, 20, 22) bei Vorliegen einer Verbraucheraggregatansteuerbedingung, um eine auf den Verbrennungsmotor (10) wirkende Last zu erzeugen und/oder zu erhöhen, um eine Auslaufzeit des Verbrennungsmotors (10) zu verkürzen, und
- Ansteuern der elektrischen Maschine (32, 32') zum Antreiben des Verbrennungsmotors (10) bei Vorliegen einer Verbrennungsmotorstartbedingung,
**dadurch gekennzeichnet, dass** die Steuereinheit (46) bei Vorliegen der Verbraucheraggregatsansteuerbedingung den Generator (22, 22', 22") so ansteuert, dass dieser einen maximal möglichen Ladestrom abgibt und dass die Steuereinheit (46) die Zahl der angesteuerten Verbraucheraggregate (18, 20, 22) von dem Verbrennungsmotordrehzahlwert abhängig macht, der zu dem Zeitpunkt vorliegt, zu dem die Verbraucheraggregatansteuerbedingung erfüllt ist.

8. Computerprogrammprodukt mit einem Datenträger mit Programmcode, der dazu ausgebildet ist, ein Verfahren nach Anspruch 7 durchzuführen, wenn der Programmcode in einer Vorrichtung nach einem der Ansprüche 1 bis 6 abläuft.

## Claims

1. A device for starting an internal combustion engine (10) arranged in a vehicle, with
an electric machine (32, 32', 32") which is designed to drive the internal combustion engine (10) at least at times,
a storage unit (34, 34', 54) which is designed to supply the electric machine (32, 32', 32") with electric power at least at times,
a number of consumer units (18, 20, 22) which can be driven at least at times by the internal combustion engine (10) via a respective operative connection (24, 26, 28, 30), wherein one of the consumer units is a generator (22, 22', 22") which is designed to charge the storage unit (34, 34', 54) at least at times, and
a control unit (46) which is designed,
if a consumer-unit activation condition is present, to activate at least one consumer unit (18, 20, 22), in order to generate and/or increase a load which acts on the internal combustion engine (10), in order to shorten a run-down time of the internal combustion engine (10), and, if an internal combustion engine start condition is present, to activate the electric machine (32, 32', 32") to drive the internal combustion engine (10),
**characterised in that** the control unit (46) is designed, if the consumer-unit activation condition is present, to activate the generator (22, 22', 22") such that it emits a maximum possible charging current and the control unit is designed to make the number of consumer units (18, 20, 22) which are to be activated dependent on the internal combustion engine speed value which is present at the time at which the consumer-unit activation condition is met.

2. A device according to Claim 1, **characterised in that** the consumer-unit activation condition is present if an operative connection between the internal combustion engine (10) and driven wheels is interrupted and the internal combustion engine (10) at least at times has a decreasing internal combustion engine speed curve.

3. A device according to one of the preceding claims, **characterised in that** the internal combustion engine start condition is present if in a first vehicle operating state a startup signal is present and/or if in a second vehicle operating state an engine torque demand is present.

4. A device according to one of the preceding claims, **characterised in that** the control unit (46) is further designed to activate the electric machine (32, 32', 32") to drive the internal combustion engine (10) if a variable which represents the internal combustion engine speed is less than or equal to a threshold value (n_zustart).

5. A device according to one of the preceding claims, **characterised in that** the control unit (46) is further designed to terminate the activation of the consumer unit (18, 20, 22) if the internal combustion engine start condition is present.

6. A device according to one of the preceding claims, **characterised in that** the control unit (46) is further designed to make the type of activation of the consumer unit (18, 20, 22) dependent on the internal combustion engine speed value which is present at the time at which the consumer-unit activation condition is met.

7. A method for starting an internal combustion engine (10) arranged in a vehicle, wherein the vehicle has:
an electric machine (32, 32', 32") which is designed to drive the internal combustion engine (10) at least at times,
a storage unit (34, 34', 54) which is designed to supply the electric machine (32, 32', 32") with electric power at least at times,
a number of consumer units (18, 20, 22) which can be driven at least at times by the internal combustion engine (10) via a respective operative connection (24, 26, 28, 30), wherein one of the consumer units is a generator (22, 22', 22") which is designed to charge the storage unit (34, 34', 54) at least at times, and a control unit (46), wherein the following steps take place in the control unit (46):
- activating at least one consumer unit (18, 20, 22) if a consumer-unit activation condition is present, in order to generate and/or increase a load acting on the internal combustion engine (10), in order to shorten a run-down time of the internal combustion engine (10), and
- activating the electric machine (32, 32') to drive the internal combustion engine (10) if an internal combustion engine start condition is present,
**characterised in that** the control unit (46), if the consumer-unit activation condition is present, activates the generator (22, 22', 22") such that it emits a maximum possible charging current, and **in that** the control unit (46) makes the number of activated consumer units (18, 20, 22) dependent on the internal combustion engine speed value which is present at the time at which the consumer-unit activation condition is met.

8. A computer program product with a data medium with program code which is designed to carry out a method according to Claim 7 if the program code is executed in a device according to one of Claims 1 to 6.

## Revendications

1. Dispositif permettant de faire démarrer un moteur à combustion interne (10) monté dans un véhicule comprenant :
une machine électrique (32, 32', 32") qui est réalisée pour permettre d'entraîner au moins temporairement le moteur à combustion interne (10),
une unité d'accumulation (34, 34', 54), qui est réalisée pour permettre d'alimenter au moins temporairement la machine électrique (32, 32', 32") en énergie électrique,
un ensemble de groupes consommateurs (18, 20 22) qui peuvent être entraînés au moins temporairement par le moteur à combustion interne (10) par l'intermédiaire d'une liaison techniquement active (24, 26, 28, 30) respective, l'un des groupes consommateurs étant un générateur (22, 22', 22") qui est réalisé pour permettre de charger au moins temporairement l'unité d'accumulation (34, 34', 54), et
une unité de commande (46) qui est réalisée :
en présence d'une condition de commande d'un groupe consommateur pour commander au moins un groupe consommateur (18, 20, 22) pour produire et/ou augmenter une charge agissant sur le moteur à combustion interne de façon à raccourcir le temps d'arrêt du moteur à combustion interne (10), et en présence d'une condition de démarrage du moteur à combustion interne pour commander la machine électrique (32, 32', 32") pour entraîner le moteur à combustion interne (10),
**caractérisé en ce que**
l'unité de commande (46) est réalisée pour permettre, en présence de la condition de commande d'un groupe consommateur, de commander le générateur (22, 22', 22") de façon qu'il délivre le courant de charge maximum possible, et est réalisée pour permettre de rendre le nombre de groupes consommateurs (18, 20, 22) à commander dépendant de la vitesse de rotation du moteur à combustion interne qui est présente à l'instant où la condition de commande du groupe consommateur est remplie.

2. Dispositif conforme à la revendication 1,
**caractérisé en ce que**
la condition de commande du groupe consommateur est présente lorsqu'une liaison active entre moteur à combustion interne (10) et les roues entraînées est interrompue et que le moteur à combustion interne (10) présente au moins temporairement une évolution de la vitesse décroissante.

3. Dispositif conforme à l'une des revendications précédentes,
**caractérisé en ce que**
la condition de démarrage du moteur à combustion interne est présente lorsque, dans un premier état de fonctionnement du véhicule un signal de démarrage est présent et/ou lorsque dans un second état de fonctionnement du véhicule une demande de couple moteur est présente.

4. Dispositif conforme à l'une des revendications précédentes,
**caractérisé en ce que**
l'unité de commande (46) est en outre réalisée pour permettre de commander la machine électrique (32, 32', 32") pour entraîner le moteur à combustion interne (10) lorsqu'une grandeur représentative de la vitesse de rotation du moteur à combustion interne est inférieure ou égale à une valeur de seuil (n_zustart).

5. Dispositif conforme à l'une des revendications précédentes,
**caractérisé en ce que**
l'unité de commande (46) et en outre réalisée pour permettre d'achever la commande du groupe consommateur (18, 20, 22) lorsque la condition de démarrage du moteur à combustion interne est présente.

6. Dispositif conforme à l'une des revendications précédentes,
**caractérisé en ce que**
l'unité de commande (46) est en outre réalisée pour permettre de rendre le type de commande du groupe consommateur (18, 20, 22) dépendant de la valeur de la vitesse de rotation du moteur à combustion interne qui est présente à l'instant où la condition de commande du groupe consommateur est remplie.

7. Procédé permettant de faire démarrer un moteur à combustion interne (10) monté dans un véhicule, ce véhicule comprenant :
une machine électrique (32, 32', 32") qui est réalisée pour permettre d'entraîner au moins temporairement le moteur à combustion interne (10),
une unité d'accumulation (34, 34', 54) qui est réalisée pour permettre d'alimenter au moins temporairement la machine électrique (32, 32', 32") en énergie électrique,
un ensemble de groupes consommateurs (18, 20, 22) qui peuvent être entraînés au moins temporairement, par le moteur à combustion interne (10) par l'intermédiaire d'une liaison techniquement active, respective (24, 26, 28, 30), l'un des groupes consommateurs étant un générateur (22, 22', 22") qui est réalisé pour permettre de charger au moins temporairement l'unité d'accumulation (34, 34', 54), et
une unité de commande (46), l'unité de commande (46) effectuant les étapes suivantes consistant à :
- commander au moins un groupe consommateur (18, 20, 22) en présence d'une condition de commande de ce groupe consommateur pour produire et/ou augmenter une charge agissant sur le moteur à combustion interne (10) de façon à diminuer le temps d'arrêt du moteur à combustion interne (10), et
- commander la machine électrique (32, 32') pour entraîner le moteur à combustion interne (10) en présence d'une condition de démarrage du moteur à combustion interne,
**caractérisé en ce qu'**
en présence de la condition de démarrage du groupe consommateur, l'unité de commande (46) commande le générateur (22, 22' 22") de sorte qu'il délivre le courant de charge maximum possible, et l'unité de commande (46) rend le nombre de groupes consommateurs commandé (18, 20, 22) dépendant de la valeur de la vitesse de rotation du moteur à combustion interne présente à l'instant où la condition de commande du groupe consommateur est remplie.

8. Produit programme d'ordinateur comportant un support de données ayant un code de programme réalisé pour mettre en oeuvre le procédé conforme à la revendication 7, lorsque ce code de programme se déroule dans un dispositif conforme à l'une des revendications 1 à 6.
